# EUROPEAN PATENT SPECIFICATION

(11) **EP 2 733 395 B1**
(45) Date of publication and mention of the grant of the patent: **04.10.2017**
(21) Application number: 13792848.7
(22) Date of filing: 24.04.2013
(51) Int. Cl.: F16J 9/26

(54) **PISTON RING**
KOLBENRING
SEGMENT DE PISTON

(30) Priority: 28.08.2012 JP 2012187105
(43) Date of publication of application: 21.05.2014
(73) Proprietor: Kabushiki Kaisha Riken, Tokyo 102-8202 (JP)
(72) Inventor: SASAKI, Hayato, Saitama 3608522 (JP); ONO, Takashi, Saitama 3608522 (JP)
(74) Representative: Luten, Martin Haaije
(86) International application number: PCT/JP2013/062064
(87) International publication number: WO 2014/034180

(56) References cited:
- WO-A1-2011/071049
- JP-A- 2010 280 879
- US-A1- 2012 101 011

## Description

### Technical Field

The present invention relates to a piston ring, and more particularly to a piston ring for an internal combustion engine.

### Background Art

Among piston rings used in an internal combustion engine, a top ring installed closest to a combustion chamber is violently knocked on the piston ring groove (ring groove) of a piston comprising an aluminum alloy or the like by combustion pressure, and at the same time slides on the surface of the ring groove. In the internal combustion engine, high temperature is reached by the combustion of a fuel. It is known that 200°C or higher is reached near the top ring of a gasoline engine, and a decrease in the strength of the piston is caused by thermal shock or the like.

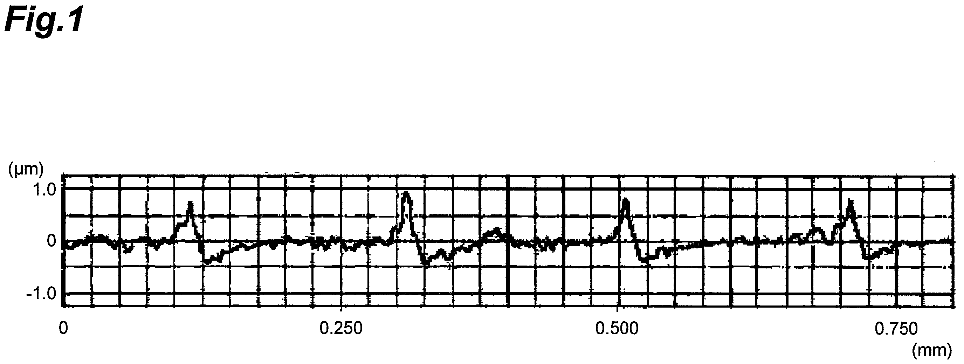

Protrusions of about 1 µm are formed on the surface of the ring groove of a piston at intervals of 0.2 mm, as shown in Figure 1. This is due to turning by a cutting tool. These protrusions are lost or abraded by the knocking and sliding of a piston ring, and a newly produced aluminum surface is exposed on the ring groove surface. The newly produced aluminum surface adheres easily to the surface of the piston ring comprising a metal, and therefore, aluminum adheres to the surface of the piston ring. This phenomenon is hereinafter referred to as aluminum adhesion. It is considered that in a high output engine, the surface of a ring groove roughens easily, a newly produced aluminum surface is further exposed by the knocking and sliding of a piston ring, and aluminum adhesion is repeated, and therefore, the abrasion of the ring groove proceeds rapidly. When the abrasion of the ring groove increases, the sealing performance by the piston ring decreases, and a blow-by gas in which a combustion gas flows into a crankcase from a combustion chamber increases. When the blow-by gas increases, troubles, such as a decrease in the output of the engine, may be caused.

In order to prevent aluminum adhesion, methods for not bringing a ring groove and a piston ring, particularly a top ring, into direct contact with each other, methods for relieving the attack of a piston ring on a ring groove, and the like have been conventionally proposed.

As measures on the piston side, a method for subjecting a ring groove surface comprising an aluminum alloy to anodic oxidation treatment (alumite treatment), and further filling micropores formed by the treatment with a lubricative substance is proposed in Patent Literature 1. A hard oxide film is formed on the ring groove surface by the anodic oxidation treatment, and therefore, the falling off of the aluminum alloy is prevented, and aluminum adhesion is suppressed. However, problems are that the cost required for the anodic oxidation treatment for the piston is high, and the aluminum oxide is hard, and therefore, the initial running-in performance is poor.

On the other hand, as measures on the piston ring side, a method for forming, on a piston ring side surface, a film in which a solid lubricant, such as molybdenum disulfide, is dispersed in a polyamide, a polyimide, or the like, which is a heat-resistant resin, is described in Patent Literature 2. In this method, the solid lubricant in the film cleaves and abrades, and thus, the coefficient of friction of the film decreases, the attack force on a ring groove is relieved, and aluminum adhesion is suppressed.

In addition, a method for forming a surface film composed of a heat-resistant resin containing a copper-based powder on a piston ring side surface is described in Patent Literature 3. In Patent Literature 3, it is described that by the addition of the copper-based powder, abrasion resistance is provided to the surface film formed on the piston ring surface, and the lubricity by the heat-resistant resin can be allowed to function over a long period. In addition, it is described that by making the shape of the copper-based powder scaly, and disposing the powder so as to be stacked in the thickness direction, a piston ring groove can be prevented from damaging.

In recent years, higher efficiency of engines has been promoted in terms of reducing environmental loads, and durability in which sufficient performance is exhibited under higher temperature and higher load conditions than conventional ones is also required of piston rings. In the method in Patent Literature 2, the solid lubricant is added as an essential component, and the solid lubricant itself cleaves and abrades, thereby decreasing the coefficient of friction of the film and relieving the attack force on a ring groove, as described above. Therefore, the abrasion resistance of the film is low, and it is difficult to maintain the film and sustain the effect of preventing aluminum adhesion over a long period. Particularly, it is difficult to maintain the film over a long period and obtain the above-described effect under high temperature and high load conditions. In addition, also in the film in Patent Literature 3, durability under high temperature and high load conditions cannot be said to be sufficient, and the effect of preventing aluminum adhesion cannot be maintained over a long period in a high output engine. The effect of preventing aluminum adhesion is hereinafter described as an "aluminum adhesion prevention effect."
US2012/0101011A1 describes a sliding member coating composition for forming a coating on the surface of a sliding member. Alumina and polyimide are described as examples of abrasion inhibiting members and a binder resin.

### Citation List

### Patent Literature

[Patent Literature 1] Japanese Patent Application Laid-Open No. 63-170546
[Patent Literature 2] Japanese Patent Application Laid-Open No. 62-233458
[Patent Literature 3] International Publication No. WO2007/099968

### Summary of Invention

### Technical Problem

It is an object of the present invention to solve the above problems and provide a piston ring that can maintain an excellent aluminum adhesion prevention effect over a long period in a high output engine.

### Solution to Problem

As a result of diligent study in view of the above problems, the present inventors have found that by providing a piston ring according to claim 1, an excellent aluminum adhesion prevention effect can be maintained over a long period even in a high output engine, and thought of the present invention. Specifically, a piston ring according to one aspect of the present invention is a piston ring in which at least one of upper and lower surfaces is covered with a resin-based film containing a plate-like filler, wherein the plate-like filler contains alumina, The upper and lower surfaces of the piston ring are surfaces to be disposed in a ring groove, of the surfaces of the piston ring, and are surfaces roughly perpendicular to the outer peripheral surface of the piston ring.

In the above aspect, it is preferable that the average particle diameter of the plate-like filler be 2 to 20 µm.

In the above aspect, the aspect ratio of the plate-like filler is 20 to 200.

In the above aspect, it is preferable that the content of the plate-like filler be 0.1 to 30% by volume based on the resin-based film.

### Advantageous Effects of Invention

The piston ring of the present invention can maintain an excellent aluminum adhesion prevention effect over a long period even in a high output engine.

### Brief Description of Drawings

[Figure 1] Figure 1 is a diagram showing the results of measuring the surface roughness of the piston ring groove surface of a piston.
[Figure 2] Figure 2 is a cross-sectional view showing the outline of a single body adhesion tester.
[Figure 3] Figure 3a is a perspective view of one embodiment of a piston ring according to the present invention, and Figure 3b is a cross-sectional view taken along line b-b of the piston ring shown in Figure 3a.

### Description of Embodiments

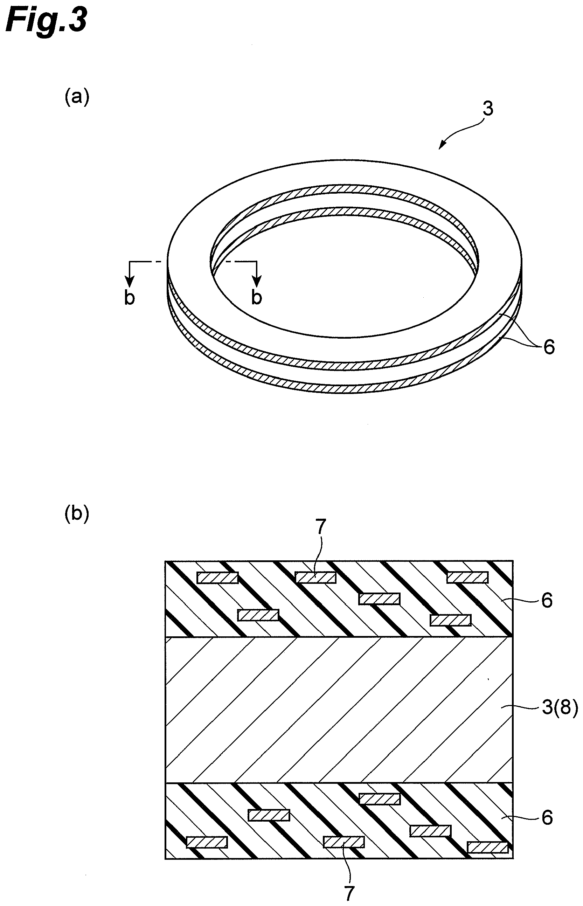

A piston ring in this embodiment will be described in detail below. As shown in Figure 3a and Figure 3b, at least one of the upper and lower surfaces of a piston ring 3 according to this embodiment is covered with a resin-based film 6. The resin-based film 6 contains a plate-like filler 7. The plate-like filler 7 contains at least one of a group selected from alumina, silicon carbide, silicon nitride, and boron nitride. The plate-like filler 7 may be composed of at least one of a group selected from alumina, silicon carbide, silicon nitride, and boron nitride.

### (1) Piston Ring Base Material

It is desirable that a piston ring base material 8 constituting the piston ring in this embodiment has, in addition to processability and heat resistance, predetermined strength and abrasion resistance because collision with a ring groove is repeated. Examples of preferable materials include steel, martensitic stainless steel, austenitic stainless steel, and high grade cast iron. In addition, in order to improve abrasion resistance, a piston ring base material subjected to nitriding treatment in the case of stainless steel, or a piston ring base material subjected to hard chromium plating or electroless nickel plating treatment in the case of cast iron may be used.

### (2) Undercoat Treatment of Piston Ring

In order to improve the adhesiveness between the resin-based film and the piston ring in this embodiment, a phosphate film may be formed on the surfaces (upper and lower surfaces) of the piston ring base material. Examples of the phosphate salt film include zinc phosphate-based, manganese phosphate-based, and calcium phosphate-based films. In addition, a chemical conversion-treated film or an oxide film other than phosphate films can also be formed. A chemical conversion-treated film cannot be formed on a piston ring in which a hard chromium plating film, an electroless nickel plating film, or the like is formed on the surface. Therefore, in order to ensure the adhesiveness of the film, it is desirable to remove inorganic soil and organic soil from the surface of the piston ring base material. In addition, blast treatment doubling as the roughness adjustment of the surface may be performed on the piston ring. Both the removal of soil and blast treatment may be carried out.

### (3) Film

The resin-based film covering the piston ring in this embodiment is characterized by containing a plate-like filler of at least one of alumina, silicon carbide, silicon nitride, and boron nitride. In an internal combustion engine, collision is repeated between a piston ring and the ring groove surface of a piston at high temperature by combustion pressure, and at the same time, the piston ring surface and the ring groove surface slide in the circumferential direction. In the resin-based film in this embodiment, the hard plate-like filler is arranged substantially parallel to the film surface, and therefore, without roughening the ring groove surface of a piston that is the opposite material, protrusions on the ring groove surface can be worn at the initial stage of sliding. This effect is referred to as a smoothing effect. The protrusions in the ring groove disappear at the early stage in this manner, and thus, the attack force of the piston ring (damage to the ring groove surface) when the ring groove surface collides and slides with the piston ring reduces significantly. In addition, the resin-based film in this embodiment in which the hard, high strength plate-like filler is dispersed has high strength and is excellent in abrasion resistance, and stress due to the above shock is relaxed by the hard plate-like filler scattered in the resin-based film, and therefore, the film is maintained over a long period also in a high output engine. Further, after the protrusions have disappeared, the soft aluminum of the aluminum alloy in the ring groove surface abrades selectively by sliding contact with the hard plate-like filler in the resin-based film, and primary crystal silicon protrudes on the ring groove surface. Therefore, the contact between the aluminum and the piston ring is suppressed, and aluminum adhesion can be effectively prevented. In this state, the sliding contact between the hard plate-like filler in the resin-based film and the primary crystal silicon is dominant, and the hardness difference between the two is small, and the smooth flat surfaces of the resin-based film and the ring groove surface come into sliding contact with each other. Therefore, also under high temperature and high load conditions, the abrasion of both of the piston ring and the piston is small, and the ideal sliding surfaces of both are maintained. Therefore, in the piston ring in this embodiment, an excellent aluminum adhesion prevention effect can be maintained over a long period also in a high output engine.

In this embodiment, "plate-like" means a shape in which the long side is larger than the thickness. The plate-like filler need not necessarily have a perfectly flat surface, and may have a curved surface or a shape having irregularities. By dispersing a plate-like filler of at least one of alumina, silicon carbide, silicon nitride, and boron nitride in the resin-based film, the above effect can be obtained. Particularly, by using plate-like alumina, the aluminum adhesion prevention effect becomes significant. The plate-like filler can also be manufactured by a known method. A commercial product can also be used as the plate-like filler. Examples of the plate-like alumina include synthetic plate-like alumina (Serath) manufactured by Kinsei Matec Co., Ltd. and an alumina-based filler (Serasyuru) manufactured by Kawai Lime Industry Co., Ltd. In addition, the plate-like filler added to the resin-based film in this embodiment may be one, but two or more may be selected and added according to the material of the piston that is the opposite material, the state of the surface of the ring groove, and the like so that the aluminum adhesion prevention effect increases.

The average particle diameter of the plate-like filler added to the resin-based film covering the piston ring in this embodiment is preferably 2 to 20 µm. Here, the average particle diameter of the plate-like filler is the average length of long sides. The average particle diameter can be calculated by observing by a scanning electron microscope (SEM), or the like. By setting the average particle diameter of the plate-like filler in the above range, protrusions on a ring groove surface can be more effectively disappeared. If the average particle diameter of the plate-like filler is less than 2 µm, it may be difficult to wear the protrusions in a short time. On the other hand, if the average particle diameter of the plate-like filler is more than 20 µm, roughness may occur on the surface of the ring groove.

In addition, the aspect ratio of the plate-like filler added to the resin-based film covering the piston ring in this embodiment is preferably 20 to 200. The aspect ratio of the plate-like filler is the ratio of the long side length to the thickness of the plate-like filler (long side length/thickness). The aspect ratio of the plate-like filler can be calculated by observing the surface and cross section of the film by a scanning electron microscope (SEM), or the like. By setting the aspect ratio of the plate-like filler in the above range, a better stress relaxation effect is exhibited, the attack force of the piston ring on a piston material (ring groove) can be reduced, the effect of relaxing the stress that the piston ring receives from the piston material improves further, and the film can be stably maintained over a long period. If the aspect ratio of the plate-like filler is less than 20, roughness may occur on the ring groove surface. On the other hand, if the aspect ratio is more than 200, the stress relaxation effect decreases.

The content of the plate-like filler in the resin-based film is preferably 0.1 to 30% by volume based on the entire film. By setting the content of the plate-like filler in the above range, protrusions present on the surface of a ring groove can be worn in a shorter time without roughening the surface of the ring groove, and then, the attack force of the ring groove on the resin-based film can be reduced. In addition, by setting the content of the plate-like filler in the above range, the area of the plate-like filler exposed on the surface of the resin-based film is optimized, and the effect of relaxing stress due to collision with the ring groove surface improves further. Therefore, the film is stably maintained over a longer period, and an excellent aluminum adhesion prevention effect can be sustained. If the content of the plate-like filler is less than 0.1% by volume, it is difficult to wear the protrusions on the ring groove surface in a short time. On the other hand, if the content of the plate-like filler is more than 30% by volume, roughness may occur on the ring groove surface. The content of the plate-like filler in the resin-based film can be calculated by subjecting the surface and cross section of the film to scanning electron microscope (SEM) observation, or the like.

In conventional films for aluminum adhesion prevention, solid lubricants, such as polytetrafluoroethylene (PTFE), molybdenum disulfide, and graphite, have been considered as essential components or components desirable to be added. However, in this embodiment, the solid lubricant is preferably not added, and is preferably 1% by volume or less, more preferably 0.8% by volume or less, based on the volume of the entire film even if added.

As the resin material of the film in this embodiment, a heat-resistant polymer having an aromatic ring or an aromatic heterocycle in the main chain is preferable, and an amorphous polymer whose glass transition temperature is 190°C or higher, or a crystalline polymer or a liquid crystalline polymer whose melting point is 190°C or higher is suitable when the temperature near the piston ring groove reaches 190°C or higher. Specific examples include phenols, polyimides (PI), polyetherimides, polyamideimides (PAI), polysulfones, polyethersulfones, polyarylates, polyphenylene sulfide, polyetheretherketones, aromatic polyesters, aromatic polyamides, polybenzimidazole (PBI), polybenzoxazole, aromatic polycyanurates, aromatic polythiocyanurates, and aromatic polyguanamines. One of these resin materials may be used, but a mixture or a composite containing at least one type of these resin materials may be used. In addition, by using organic-inorganic hybrid resins in which inorganic substances, such as silica, alumina, titania, and zirconia, are dispersed in these resin materials at molecular levels, the adhesiveness to the substrate can be further improved. There are also cases where the temperature near the ring groove reaches 250°C or higher, and therefore, as the resin material, PBI, PI, and PAI having high heat resistance are preferable, and PI is still more preferable considering the coefficient of friction. In addition, in order to make a coating liquid, being soluble in organic solvents is preferable, and it is preferable to use PI or PAI commercially available as a varnish. Examples of commercial products include U-Varnish-A and U-Varnish-S (manufactured by Ube Industries, Ltd.), HCI series (manufactured by Hitachi Chemical Co., Ltd.), FC-114 Fine Polyimide Varnish (manufactured by Fine Chemical Japan Co., Ltd.), H850D (manufactured by Arakawa Chemical Industries, Ltd.), and RC5057, RC5097, and RC5019 (manufactured by I.S.T Corporation) for PI. In addition, examples of commercial products include HPC series (manufactured by Hitachi Chemical Co., Ltd.) and VYLOMAX (manufactured by Toyobo Co., Ltd.) for PAI, and examples of commercial products include COMPOCERAN H800 and H900 series (manufactured by Arakawa Chemical Industries, Ltd.) for resins in which silica is hybridized with a polyimide or a polyamideimide.

The thickness of the resin-based film of the piston ring in this embodiment (one side) is preferably 5 to 20 µm. If the thickness of the film is more than 20 µm, problems may occur when the piston ring is mounted in a ring groove, and such a thickness is not preferable also in terms of cost. If the thickness of the resin-based film is less than 5 µm, the thickness of the film after the removal of protrusions on the ring groove surface decreases, and a possibility that the piston ring base material is exposed on the surface by the wear of the film occurs, and therefore, it is difficult to maintain the aluminum adhesion prevention effect over a long period. In addition, the effect of this embodiment is obtained by covering at least one surface of the upper and lower surfaces of the piston ring with the film, and particularly, by covering the lower surface on which aluminum adhesion is likely to occur, a better aluminum adhesion prevention effect is exhibited. In order to obtain a better aluminum adhesion prevention effect, it is preferable to cover the upper and lower surfaces of the piston ring.

### (4) Method for Forming Film

The method for forming the film in this embodiment is not particularly limited, and known methods, such as spray coating, spin coating, roll coating, dip coating, and printing methods, can be used. However, in terms of application efficiency and suppressing the occurrence of paint unevenness, printing methods are preferable. The method for preparing a coating liquid or an ink is not particularly limited. For example, a coating liquid may be prepared by adding a solvent, as required, to a liquid in which a plate-like filler is dispersed in a varnish, such as a commercial polyimide, to adjust the viscosity of the liquid to an optimum value. The solvent and additives used for the preparation of a coating liquid or the adjustment of the viscosity of an ink are appropriately selected depending on the coating method or the printing method. The dispersion method is not particularly limited, and known methods, such as a sand mill, a bead mill, a ball mill, and a roll mill, are used. At this time, a dispersing agent and the like may be appropriately added as required.

After the coating liquid is applied to the upper or lower surface of the piston ring, or after printing, drying is performed, and curing treatment is performed. The curing temperature and time are appropriately selected depending on the resin material used, and the like.

### Examples

The present invention will be described in more detail below based on Examples, but the present invention is only limited by the scope of the appended claims.

### (Example 1)

A CrN film having a thickness of about 30 µm was formed by an ion plating method on the outer peripheral surface of a piston ring made of low chromium steel. The obtained piston ring was subjected to alkali degreasing, and then immersed in a manganese phosphate aqueous solution heated to about 80°C, for 5 minutes, to form a manganese phosphate film having a thickness of about 2 µm on surfaces other than the outer peripheral surface of the piston ring. A plate-like alumina powder (plate-like filler) having an average particle diameter of 10 µm and an aspect ratio of 100 was added as a filler (additive) to a polyimide varnish (RC5057 manufactured by I.S.T Corporation), and the mixture was sufficiently stirred by using a stirrer, and then passed through a three-roll mill in which the roll interval was minimized, to prepare a coating liquid for a film. Here, the amount of the plate-like alumina powder added was adjusted to be 10% by volume based on the entire film. The upper and lower surfaces of the piston ring on which the manganese phosphate film was formed were spray-coated with the coating liquid for a film followed by drying at 100°C for 5 minutes and further heating in an electric furnace at 300°C for 1 hour. The upper and lower surfaces of the piston ring were covered with a resin-based film by the above method. Both the thicknesses of the resin-based films on the upper and lower surfaces of the piston ring were about 10 µm.

### (Example 2)

A plate-like alumina powder (plate-like filler) having an average particle diameter of 10 µm and an aspect ratio of 100 was added to a liquid in which a polyamideimide resin (HR13NX, Toyobo Co., Ltd.), not falling under the scope of the claimed invention, was diluted with N-methyl-2-pyrrolidone, and the mixture was sufficiently stirred by using a stirrer, and then passed through a three-roll mill in which the roll interval was minimized, to prepare a coating liquid for a film. Here, the amount of the plate-like alumina powder added was adjusted to be 10% by volume based on the entire film. By using the obtained coating liquid, a resin-based film was formed on the upper and lower surfaces of a piston ring same as that of Example 1 by a method same as that of Example 1. Both the thicknesses of the films on the upper and lower surfaces of the piston ring were about 10 µm.

### (Example 3)

A resin-based film was formed on the upper and lower surfaces of a piston ring under the same conditions as in Example 1 except that the plate-like filler was changed from the alumina powder to a plate-like silicon carbide powder not falling under the scope of the claimed invention (average particle diameter: 10 µm, aspect ratio: 100). Both the thicknesses of the films on the upper and lower surfaces of the piston ring were about 10 µm.

### (Examples 4 to 7)

A resin-based film was formed on the upper and lower surfaces of a piston ring under the same conditions as in Example 1 except that plate-like alumina powders in which the average particle diameter was 1 µm (Example 4), 2 µm (Example 5), 20 µm (Example 6), and 30 µm (Example 7) were used as the plate-like filler. Both the thicknesses of the films on the upper and lower surfaces of the piston ring were about 10 µm.

### (Examples 8 to 11)

A resin-based film was formed on the upper and lower surfaces of a piston ring under the same conditions as in Example 1 except that plate-like alumina powders in which the aspect ratio was 10 (not falling under the scope of the claimed invention) (Example 8), 20 (Example 9), 200 (Example 10), and 300 (not falling under the scope of the claimed invention) (Example 11) were used as the plate-like filler. Both the thicknesses of the films on the upper and lower surfaces of the piston ring were about 10 µm.

### (Examples 12 to 15)

A resin-based film was formed on the upper and lower surfaces of a piston ring under the same conditions as in Example 1 except that the amount of the plate-like alumina powder added was set to 0.05% by volume (Example 12), 0.1% by volume (Example 13), 30% by volume (Example 14), and 40% by volume (Example 15) taking the volume of the entire film as 100. Both the thicknesses of the films on the upper and lower surfaces of the piston ring were about 10 µm.

### (Comparative Example 1)

A film was formed on the upper and lower surfaces of a piston ring under the same conditions as in Example 1 except that instead of the plate-like alumina powder, solid lubricants were used as the additive. As the solid lubricants, a molybdenum disulfide powder (average particle diameter: 2 µm) and a graphite powder (average particle diameter: 2 µm) were used, and the amounts added were each set to 5% by volume taking the volume of the entire film as 100. Both the thicknesses of the films on the upper and lower surfaces of the piston ring were about 10 µm.

### (Comparative Example 2)

A spherical alumina powder having an average particle diameter of 0.5 µm was added to a liquid in which a polyamideimide resin (HR13NX, Toyobo Co., Ltd.) was diluted with N-methyl-2-pyrrolidone, and the mixture was sufficiently stirred by using a stirrer, and then passed through a three-roll mill in which the roll interval was minimized, to prepare a coating liquid. Here, the amount of the spherical alumina powder added was set to 10% by volume taking the volume of the entire film as 100. Using the obtained coating liquid, a film was formed on a piston ring similar to that of Example 1 by a method similar to that of Example 1. Both the thicknesses of the films on the upper and lower surfaces of the piston ring were about 10 µm.

### (Comparative Example 3)

A film was formed on the upper and lower surfaces of a piston ring under the same conditions as in Example 1 except that the additive was changed from the plate-like alumina powder to a spherical alumina powder having an average particle diameter of 0.5 µm. The amount of the spherical alumina powder added was set to 10% by volume taking the volume of the entire film as 100. Both the thicknesses of the films on the upper and lower surfaces of the piston ring were about 10 µm.

### (Comparative Example 4)

A film was formed on the upper and lower surfaces of a piston ring under the same conditions as in Example 1 except that the additive was changed from the plate-like alumina powder to a scaly copper powder having an average particle diameter of 10 µm. The amount of the scaly copper powder added was set to 20% by volume taking the volume of the entire film as 100. Both the thicknesses of the films on the upper and lower surfaces of the piston ring were about 10 µm. The formation conditions for the films of the above Examples 1 to 15 and Comparative Examples 1 to 4 are shown in Table 1.

### (Single Body Adhesion Test)

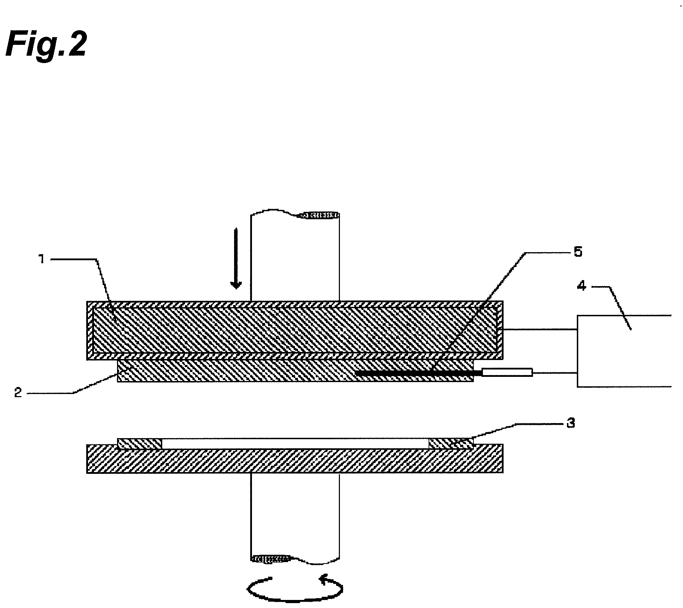

In a single body adhesion test, each of the piston rings 3 of Examples 1 to 15 and Comparative Examples 1 to 4 was mounted in a single body adhesion tester shown in Figure 2 simulating an environment similar to that of a gasoline engine, and evaluation for aluminum adhesion was performed by the following method. A single body adhesion test was performed for 5 hours in which a piston material 2 (corresponding to a ring groove) made of an aluminum alloy was reciprocated up and down while the piston ring 3 was rotated at 3.0 mm/s, and a load having a surface pressure of 5 MPa was applied to the piston ring 3 at predetermined intervals. Here, using a heater 1 and a thermocouple 5, control was performed so that the temperature of the piston material 2 was 250°C ± 1°C, and a fixed amount of a lubricating oil was sprayed on the piston ring 3 together with a nitrogen gas at predetermined intervals.

The results of evaluating the amount of the remaining film (the thickness of the remaining resin-based film) of the piston ring, the presence or absence of aluminum adhesion on the surface of the piston ring, and the amount of abrasion and surface roughness of the piston material, after the single body adhesion test, are shown in Table 2. The evaluation results shown in Table 2 are based on the following determination criteria. As the surface roughness of the piston material, the level difference Rk of the core portion of the piston material was calculated based on JISB0633. The surface roughness Rk of the piston material before the single body adhesion test was about 1.0 µm in all Examples and Comparative Examples.
Amount of remaining film (piston ring) ... 3 µm or more: ⊚ (double circle mark), 1 µm or more and less than 3 µm: ○ (circle mark), less than 1 µm (with manganese phosphate film): △ (triangle mark), less than 1 µm (without manganese phosphate film): × (cross mark)
The presence or absence of aluminum adhesion (piston ring) ... there is no aluminum adhesion: 0 (circle mark), there is aluminum adhesion but slight: △(triangle mark), there is aluminum adhesion: × (cross mark)
Amount of abrasion (piston material) ... less than 0.5 µm: ⊚ (double circle mark), 0.5 µm or more and less than 1.0 µm: O(circle mark), 1.0 µm or more and less than 1.5 µ: △ (triangle mark), 1.5 µm or more: × (cross mark)
Surface roughness (piston material) ... less than 0.3 µm: ⊚ (double circle mark), 0.3 µm or more and less than 0.5 µm: O(circle mark), 0.5 µm or more and less than 0.7 µm: △ (triangle mark), 0.7 µm or more: × (cross mark)
Overall determination ... superior: ⊚ (double circle mark), good: ○ (circle mark), relatively good: △ (triangle mark), unsatisfactory: × (cross mark)

**[Table 1]**

| | Resin-based film | | | | | |
|---|---|---|---|---|---|---|
| | Resin | Filler | | | | |
| | | Type | Shape | Particle diameter (µm) | Aspect ratio | Amount added (% by volume) |
| Example 1 | PI | Al₂O₃ | Plate-like | 10 | 100 | 10 |
| Example 2 | PAI | Al₂O₃ | Plate-like | 10 | 100 | 10 |
| Example 3 | PI | SiC | Plate-like | 10 | 100 | 10 |
| Example 4 | PI | Al₂O₃ | Plate-like | 1 | 100 | 10 |
| Example 5 | PI | Al₂O₃ | Plate-like | 2 | 100 | 10 |
| Example 6 | PI | Al₂O₃ | Plate-like | 20 | 100 | 10 |
| Example 7 | PI | Al₂O₃ | Plate-like | 30 | 100 | 10 |
| Example 8 | PI | Al₂O₃ | Plate-like | 10 | 10 | 10 |
| Example 9 | PI | Al₂O₃ | Plate-like | 10 | 20 | 10 |
| Example 10 | PI | Al₂O₃ | Plate-like | 10 | 200 | 10 |
| Example 11 | PI | Al₂O₃ | Plate-like | 10 | 300 | 10 |
| Example 12 | PI | Al₂O₃ | Plate-like | 10 | 100 | 0.05 |
| Example 13 | PI | Al₂O₃ | Plate-like | 10 | 100 | 0.1 |
| Example 14 | PI | Al₂O₃ | Plate-like | 10 | 100 | 30 |
| Example 15 | PI | Al₂O₃ | Plate-like | 10 | 100 | 40 |
| Comparative Example 1 | PI | * | | | | |
| Comparative Example 2 | PAI | Al₂O₃ | Spherical | 0.5 | - | 10 |
| Comparative Example 3 | PI | Al₂O₃ | Spherical | 0.5 | - | 10 |
| Comparative Example 4 | PI | Cu | Scaly | 10 | 100 | 20 |

**[Table 2]**

| | Results of single body adhesion tests | | | | | |
|---|---|---|---|---|---|---|
| | After 5 hours | | | | | After 15 hours |
| | Piston ring | | Piston material | | Determination | Piston ring |
| | Amount of remaining film | Adhesion | Amount of abrasion | Surface roughness | | Adhesion |
| Example 1 | ⊚ | ○ | ⊚ | ⊚ | ⊚ | ○ |
| Example 2 | ⊚ | ○ | ⊚ | ⊚ | ⊚ | Δ |
| Example 3 | ⊚ | ○ | ⊚ | ⊚ | ⊚ | Δ |
| Example 4 | Δ | ○ | ○ | ○ | Δ | - |
| Example 5 | ⊚ | ○ | ⊚ | ⊚ | ⊚ | - |
| Example 6 | ⊚ | ○ | ⊚ | ⊚ | ⊚ | - |
| Example 7 | Δ | ○ | Δ | Δ | Δ | - |
| Example 8 | Δ | ○ | ○ | ○ | Δ | - |
| Example 9 | ⊚ | ○ | ⊚ | ⊚ | ⊚ | - |
| Example 10 | ⊚ | ○ | ⊚ | ⊚ | ⊚ | - |
| Example 11 | ○ | ○ | Δ | Δ | Δ | - |
| Example 12 | ○ | ○ | ⊚ | ⊚ | ○ | - |
| Example 13 | ⊚ | ○ | ⊚ | ⊚ | ⊚ | - |
| Example 14 | ⊚ | ○ | ⊚ | ⊚ | ⊚ | - |
| Example 15 | ○ | ○ | ○ | ○ | ○ | - |
| Comparative Example 1 | × | × | × | × | × | - |
| Comparative Example 2 | × | × | × | × | × | - |
| Comparative Example 3 | ○ | ○ | ○ | ○ | ○ | × |
| Comparative Example 4 | Δ | Δ | Δ | Δ | Δ | - |

In Comparative Example 1 in which a piston ring was covered with a film in which molybdenum disulfide and graphite were dispersed in a polyimide, and Comparative Example 2 in which a piston ring was covered with a film in which a spherical alumina powder was dispersed in a polyamideimide, after the single body adhesion test, the resin-based film did not remain at all, abrasion proceeded to the manganese phosphate film, the undercoat, and significant aluminum adhesion was observed. In addition, it was confirmed that the surface of the piston material was not smoothed, and abrasion proceeded. On the other hand, it was found that in Comparative Example 3 in which a spherical alumina powder was dispersed in a polyimide, the occurrence of aluminum adhesion and the abrasion of the groove were suppressed more than in Comparative Examples 1 and 2, and a good state was maintained also after operation for 5 hours. This is considered as a synergistic effect due to using the hard spherical alumina powder having a smoothing effect on the piston material, and the polyimide resin having heat resistance and self-lubricating properties. On the other hand, in Comparative Example 4 in which a piston ring was covered with a film in which a scaly copper powder was dispersed in a polyimide, after the single body adhesion test, slight aluminum adhesion was observed. In addition, it was confirmed that the film on the piston ring hardly remained, abrasion proceeded also to the piston material, and the surface was not smoothed. This is considered to be because a smoothing effect on the piston material was not obtained even if the soft copper powder was used, and with the copper powder having low hardness and strength, the stress relaxation effect at the time of collision with the piston material was low, the film containing the copper powder, itself, broke, and the film could not be maintained.

On the other hand, in all of Example 1 and Example 2 in which piston rings were covered with films in which 10% by volume, based on the entire film, of a plate-like alumina powder having an average particle diameter of 10 µm and an aspect ratio of 100 was added to a polyimide and a polyamideimide, respectively, and Example 3 in which a piston ring was covered with a film in which plate-like silicon carbide was dispersed in a polyimide, the occurrence of aluminum adhesion was not observed, the abrasion of the film and the abrasion of the piston material were also little, and the surface of the piston material was smoothed. This is considered to be because the hard plate-like fillers had an excellent smoothing effect on the piston material, and the hard, high strength plate-like fillers were dispersed, and thus, the abrasion resistance, strength, and stress relaxation effect of the film improved.

For Examples 1 to 3, and Comparative Example 3 in which no aluminum adhesion was observed in the single body adhesion test for 5 hours, a 10 hour single body adhesion test was further performed. The results are shown in Table 2. In Comparative Example 3 in which the spherical alumina powder was dispersed, aluminum adhesion occurred, whereas in Example 1 in which the plate-like alumina powder was dispersed, no aluminum adhesion was observed also after 15 hours. In Example 1, the plate-like alumina is arranged substantially parallel to the film surface (or the surface of the piston material), and therefore, the friction force in the sliding of the plate-like alumina and the primary crystal silicon is smaller than that in the sliding of the spherical alumina and the primary crystal silicon. In addition, in the resin film of Example 1 in which the plate-like alumina is scattered, stress due to collision with the piston material is easily relaxed. From these reasons, it is considered that in Example 1, an ideal sliding state was maintained, and aluminum adhesion was prevented. In Example 2 using the polyamideimide, and Example 3 using the plate-like silicon carbide, the aluminum adhesion prevention effect was clearly improved more than in Comparative Example 3, but slight aluminum adhesion was observed after 15 hours. From this, it was found that as the resin material, polyimides were more preferable, and as the plate-like filler, alumina was more preferable.

In all of Examples 1 and 4 to 7 in which the average particle diameter of the plate-like alumina powder was changed, the occurrence of aluminum adhesion was not observed, and the abrasion of the film was little. Particularly, in Examples 1, 5, and 6 in which the average particle diameter of the plate-like alumina powder was in the range of 2 to 20 µm, a better smoothing effect on the piston material was shown, the amount of abrasion of the piston material was very small, less than 0.5 µm, and the amount of the remaining resin-based film was large. It was found that in all Examples, a better aluminum adhesion prevention effect than that in Comparative Example 3 was obtained in the single body adhesion test for more than 5 hours.

In all of Examples 1 and 8 to 11 in which the aspect ratio of the plate-like alumina powder was changed, the occurrence of aluminum adhesion was not observed, and the abrasion of the film was little. Particularly, in Examples 1, 9, and 10 in which the aspect ratio of the plate-like alumina powder was in the range of 20 to 200, a better smoothing effect on the piston material was shown, the amount of abrasion of the piston material was very small, less than 0.5 µm, and the amount of the remaining resin-based film was large. It was found that in all Examples, a better aluminum adhesion prevention effect than that in Comparative Example 3 was obtained in the single body adhesion test for more than 5 hours.

In all of Examples 1 and 12 to 15 in which the amount of the plate-like alumina powder added was changed, the occurrence of aluminum adhesion was not observed, and the abrasion of the film was little. Particularly, in Examples 1, 13, and 14 in which the amount of the plate-like alumina powder added was in the range of 0.1 to 30% by volume, a better smoothing effect on the piston material was shown, the amount of abrasion of the piston material was very small, less than 0.5 µm, and the amount of the remaining resin-based film was large. It was found that in all Examples, a better aluminum adhesion prevention effect than that in Comparative Example 3 was obtained in the single body adhesion test for more than 5 hours.

From the above results, it was confirmed that in the piston rings of these Examples covered with resin-based films containing plate-like fillers, an aluminum adhesion prevention effect was maintained over a long period.

### Industrial Applicability

According to the present invention, a piston ring that can maintain an excellent aluminum adhesion prevention effect over a long period in a high output engine is provided.

### Reference Signs List

1: Heater, 2: Piston material, 3: Piston ring, 4: Temperature controller, 5: Thermocouple

## Claims

1. A piston ring (3) in which at least one of upper and lower surfaces is covered with a resin-based film (6) composed of polyimide and a plate-like filler (7) composed of alumina,
wherein the resin-based film (6) is formed from a coating liquid prepared by passing the polyimide and the plate-like filler (7) through a roll mill, wherein an aspect ratio of the plate-like filler is 20 to 200.

2. The piston ring according to claim 1, wherein an average particle diameter of the plate-like filler is 2 to 20 µm.

3. The piston ring according to claim 2, wherein an average particle diameter of the plate-like filler is 10 to 20 µm.

4. The piston ring according to any one of claims 1 to 3, wherein a content of the plate-like filler is 0.1 to 30% by volume based on the resin-based film.

5. The piston ring according to any one of claims 1 to 4, wherein the plate-like alumina is arranged substantially parallel to a surface of the resin-based film.

6. Piston comprising a ring groove formed of aluminum alloy comprising primary crystal silicon, wherein a piston ring according to any one of claims 1 to 5 is mounted in said ring groove.

7. Use of a piston ring according to any of claim 1 to 5, including mounting said piston ring in a ring groove formed of aluminum alloy comprising primary crystal silicon.

## Patentansprüche

1. Ein Kolbenring (3),
bei dem mindestens eine von einer oberen und einer unteren Fläche mit einem harzbasierten Film (6) bedeckt ist, der aus Polyimid und einem aus Aluminiumoxid zusammengesetzten plattenartigen Füllmaterial (7) zusammengesetzt ist,
wobei der harzbasierte Film (6) aus einer Beschichtungsflüssigkeit gebildet ist, die durch Leiten des Polyimids und des plattenartigen Füllmaterials (7) durch eine Walzenmühle hergestellt ist,
wobei ein Aspektverhältnis des plattenartigen Füllmaterials 20 bis 200 beträgt.

2. Der Kolbenring gemäß Anspruch 1, wobei ein durchschnittlicher Partikeldurchmesser des plattenartigen Füllmaterials 2 bis 20 µm beträgt.

3. Der Kolbenring gemäß Anspruch 2, wobei ein durchschnittlicher Partikeldurchmesser des plattenartigen Füllmaterials 10 bis 20 µm beträgt.

4. Der Kolbenring gemäß irgendeinem der Ansprüche 1 bis 3, wobei ein Gehalt des plattenartigen Füllmaterials 0,1 bis 30 Volumen - % basierend auf dem harzbasierten Film beträgt.

5. Der Kolbenring gemäß irgendeinem der Ansprüche 1 bis 4, wobei das plattenartige Aluminiumoxid im Wesentlichen parallel zu einer Oberfläche des harzbasierten Films angeordnet ist.

6. Kolben mit einer Ringnut, die aus einer Aluminiumlegierung gebildet ist, die primäres kristallines Silicium aufweist, wobei ein
Kolbenring gemäß irgendeinem der Ansprüche 1 bis 5 in der Ringnut montiert ist.

7. Verwendung eines Kolbenrings gemäß irgendeinem von Anspruch 1 bis 5, aufweisend das Montieren des Kolbenrings in einer Ringnut, die aus einer Aluminiumlegierung gebildet ist, die primäres kristallines Silicium aufweist.

## Revendications

1. Segment de piston (3) dans lequel au moins l'une des surfaces supérieure et inférieure est recouverte par un film à base de résine (6) composée de polyimide et d'une charge de forme plate (7) composée d'alumine,
dans lequel le film à base de résine (6) est formé à partir d'un liquide de revêtement préparé en faisant passer le polyimide et la charge de forme plate (7) à travers un laminoir,
dans lequel un rapport d'allongement de la charge de forme plate est compris entre 20 et 200.

2. Segment de piston selon la revendication 1, dans lequel un diamètre moyen de particules de la charge de forme plate est compris entre 2 et 20 µm.

3. Segment de piston selon la revendication 2, dans lequel un diamètre moyen de particules de la charge de forme plate est compris entre 10 et 20 µm.

4. Segment de piston selon l'une quelconque des revendications 1 à 3, dans lequel une teneur de la charge de forme plate est comprise entre 0,1 et 30 % en volume sur la base du film à base de résine.

5. Segment de piston selon l'une quelconque des revendications 1 à 4, dans lequel l'alumine en forme de plaque est agencée de manière sensiblement parallèle à une surface du film à base de résine.

6. Piston comprenant une nervure de segment formée en un alliage d'aluminium comprenant du silicium cristallin primaire, dans lequel un segment de piston selon l'une quelconque des revendications 1 à 5 est monté dans ladite rainure de segment.

7. Utilisation d'un segment de piston selon l'une quelconque des revendications 1 à 5, comportant le montage dudit segment de piston dans une rainure de segment formée d'un alliage d'aluminium comprenant du silicium cristallin primaire.
